# EUROPEAN PATENT APPLICATION

(11) **EP 4 753 023 A1**
(43) Date of publication of application: **03.06.2026**
(21) Application number: 24216314.5
(22) Date of filing: 28.11.2024
(51) Int. Cl.: H01M 10/655, H01M 50/249, H01M 50/289, H01M 50/291, H01M 50/293

(54) **SINGLE-PIECE TENSION MEMBER**

(71) Applicant: Ford Global Technologies, LLC, Dearborn, MI 48126 (US)
(72) Inventor: LECK, Chris, Enfield, EN2 7EJ (GB); SCHOLTES, Duncan, Hampton, TW12 2TJ (GB); THOMAS, Ronnie, South Woodham Ferrers, CM3 5XZ (GB)
(74) Representative: HG Law International LLP

(57) **Abstract**

The present disclosure provides a tension member for a battery module including at least two battery packs. The tension member defines a length, is hollow along its length, and is formed of a single piece. The tension member is configured to divide the battery module into first and second submodules, each submodule having an end plate and comprising a battery pack. The tension member is further configured to attach to an array plate of each battery submodule. The tension member (100) includes wider portions (102) at its ends with bolt holes (108) for attachment, side walls (104) forming a hollow portion (106), and a narrow portion (110) between shoulder portions (112) to accommodate battery connections.

## Description

### FIELD OF INVENTION

The present disclosure relates to battery modules for vehicles, and more particularly to a tension member, battery module, and vehicle incorporating a single-piece tension member designed to join and insulate battery arrays in a double array module configuration.

### BACKGROUND

Battery packs for vehicles often consist of multiple battery arrays or modules assembled together. These battery packs are typically mounted on a cold plate to help regulate temperature. In many designs, the battery arrays are arranged in a double array configuration, with two arrays positioned side-by-side. This arrangement allows for a compact and space-efficient battery pack design. However, during vehicle operation, the relative movement between individual arrays of the battery should be limited or mitigated. In addition, effective thermal isolation between arrays is an important design consideration.

Existing approaches to joining battery arrays often involve welding components like cold plates or top covers. It is desirable to enhance these existing approaches, e.g., with respect to array movement and thermal isolation..

### SUMMARY OF INVENTION

In a first aspect, a tension member for a battery module which includes at least two battery packs is provided. The tension member defines a length, is hollow along its length, and is formed of a single piece. The tension member is configured to divide the battery module into first and second submodules, each of the first and second submodules having an end plate and comprising a battery pack, and attach to an array plate of each battery submodule.

This single-piece tension member provides enhanced structural rigidity to the battery module, reducing the risk of individual battery arrays moving with respect to each other during vehicle operation. The hollow design along its length allows for effective thermal insulation and gas management during potential cell venting events.

The tension member may be made of aluminium.

Using aluminium as the material for the tension member provides a lightweight yet strong structure, which is particularly beneficial for vehicle applications where weight reduction is a consideration for enhanced efficiency.

The tension member may be formed by extrusion.

Forming the tension member by extrusion allows for efficient manufacturing of a complex, single-piece design with consistent quality.

The tension member may have a first end and a second end, and the first and second ends may include respective first and second end surfaces configured to attach to the array plate of each battery submodule.

This configuration ensures secure attachment of the tension member to the battery submodules, enhancing the overall structural integrity of the battery module.

The tension member may be configured to be attached to two array plates.

Attaching the tension member to two array plates provides a robust connection between the battery submodules, effectively preventing relative movement between them.

The tension member may be configured to be attached to the array plate of each battery submodule using bolts.

Using bolts for attachment allows for easy assembly and disassembly, facilitating maintenance and potential replacement of battery components.

The tension member may include a mounting portion and a central portion, wherein the mounting portion is wider than the central portion.

This design feature provides enhanced structural support at the attachment points while maintaining a slimmer profile in the central region, optimizing space utilization within the battery module.

The mounting portion may include at least one threaded aperture.

Threaded apertures in the mounting portion facilitate secure and adjustable attachment of the tension member to other components of the battery module.

The tension member may include a shoulder portion which is defined by a change in width of the tension member between the mounting and central portions.

The shoulder portion provides additional structural reinforcement and helps distribute forces evenly across the tension member.

The central portion of the tension member may be shaped to accommodate connections of a battery array.

This feature allows for efficient integration of the tension member with existing battery array designs, minimizing the need for modifications to other components.

The tension member may be shaped to accommodate an array plate which includes a side rail.

Accommodating side rails in the tension member design ensures compatibility with various battery module configurations and enhances overall structural support.

In a second aspect, a battery module comprising the tension member of the first aspect is provided.

This battery module benefits from the enhanced structural integrity and thermal management capabilities provided by the tension member.

The battery module may further comprise a cold plate on which at least two battery arrays are provided, and two side rails, wherein the tension member is provided between two side rails and on top of the cold plate, such that the tension member is affixed to the side rails and separates the two battery arrays.

This configuration creates a robust and thermally efficient battery module structure, with the tension member acting as both a structural support and a thermal barrier between battery arrays.

In a third aspect, a vehicle comprising the tension member of the first aspect is provided.

Incorporating the tension member into a vehicle's battery system enhances the overall reliability of the vehicle's power source.

A vehicle comprising the battery module of the second aspect is also provided.

This configuration allows vehicles to benefit from the enhanced structural integrity, and thermal management features of the battery module incorporating the tension member.

### BRIEF DESCRIPTION OF FIGURES

Embodiments of the invention will be described, by way of example, with reference to the following drawings, in which:
FIG. 1 illustrates a perspective view of a tension member, according to aspects of the present disclosure.
FIG. 2 illustrates a perspective view of a tension member attached to an array plate, according to aspects of the present disclosure.
FIG. 3 illustrates a perspective view of an assembly comprising a tension member and two array plates, according to aspects of the present disclosure.
FIG. 4 illustrates a cross-sectional view of a tension member as part of a battery pack, according to aspects of the present disclosure.
FIG. 5 illustrates a side view outline of a vehicle with a battery pack, according to aspects of the present disclosure.

Common reference numerals are used throughout the figures to indicate similar features.

### DETAILED DESCRIPTION

The present disclosure provides a single-piece tension member for battery modules, particularly for use in vehicles. This tension member is designed to enhance the structural rigidity and thermal management of vehicle battery packs. The tension member, which may be formed of a single piece, is configured to connect at least two battery packs, dividing the battery module into first and second submodules. This design may reduce the potential for individual array movement within the battery module.

The tension member may be hollow along its length and may be made of materials such as aluminium, which offers a balance of strength, light weight, and thermal conductivity. The tension member may be formed by methods such as extrusion or high pressure die casting, which allow for efficient production with consistent quality and dimensional accuracy.

The tension member may also include features to facilitate its attachment to the battery submodules and to accommodate connections of a battery array. These features may enhance the overall structural integrity of the battery module and optimize space utilization within the module.

In addition to enhancing structural rigidity, the tension member may also contribute to thermal management within the battery module. The hollow design of the tension member may act as an insulator, potentially preventing heat from one battery array from affecting the performance of neighboring arrays.

In some cases, the tension member may be integrated into a battery module or a vehicle, potentially enhancing the overall performance and reliability of the vehicle's electrical system. This may lead to enhanced efficiency in electric or hybrid vehicles.

The single-piece tension member for battery modules as described herein offers potential advantages over some conventional designs, which may struggle to provide adequate structural rigidity and thermal isolation between adjacent battery arrays or submodules.

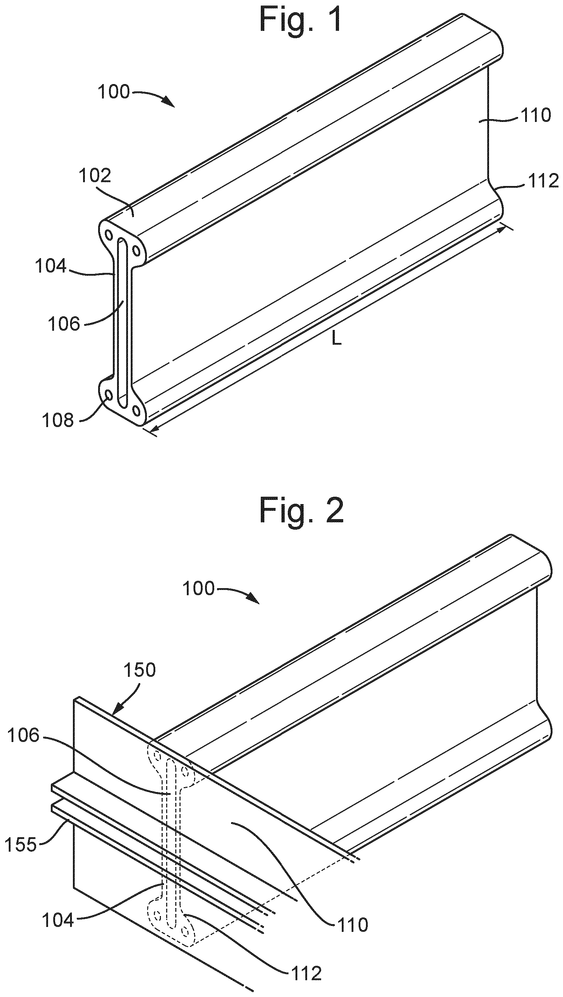

FIG. 1 illustrates a perspective view of a tension member 100. The tension member 100 is an elongated structure that defines a length and is hollow along its length. The tension member 100 is formed of a single piece and may be made of aluminium. In some examples, the tension member 100 is formed by extrusion or high pressure die casting.

The tension member 100 includes a wider portion 102 at each end and a narrow portion 110 between the wider portions 102. The wider portion 102 may be considered a mounting portion, while the narrow portion 110 may be considered a central portion. The mounting portion is wider than the central portion.

A shoulder portion 112 is defined by a change in width between the wider portion 102 and the narrow portion 110. The narrow portion 110 includes two side walls 104 that form a hollow portion 106 therebetween. The hollow portion 106 extends along the length of the tension member 100, creating an air gap in the middle of the tension member 100.

The air gap formed by the hollow portion 106 may act as an insulator for heat conduction. The shape of the tension member 100 including the hollow portion 106 may stop gas passage during a thermal event of a cell, which may be referred to as cell venting management. The air gap may also prevent heat from passing to a second module during a thermal event.

The wider portion 102 of the tension member 100 includes at least one bolt hole 108. In some examples, the bolt hole 108 may be a threaded aperture.

The tension member 100 is designed to provide strength and rigidity to a double module in a battery assembly. The single-piece construction of the tension member 100 eliminates the need for welding in the battery module assembly.

FIG. 2 illustrates a perspective view of the tension member 100 attached to an array plate 150 as part of a battery module assembly. The tension member 100 is configured to be attached to two array plates 150, one at each end of the tension member 100.

The tension member 100 has a first end and a second end, with respective first and second end surfaces configured to attach to the array plate 150 of each battery submodule. The wider portion 102 of the tension member 100 includes bolt holes 108 for securing the tension member 100 to the array plates 150. Bolts may be used to fasten the tension member 100 to the array plates 150 through these bolt holes 108.

The narrow portion 110 of the tension member 100 is positioned between the array plates 150. The central portion of the tension member 100, which includes the narrow portion 110, is shaped to accommodate connections of a battery array. The hollow portion 106 of the tension member 100 extends along its length, creating an air gap that may separate battery arrays and potentially insulate one battery array from another.

The tension member 100 is shaped to accommodate an array plate 150 which includes a side rail 155. The side rail 155 is visible along the length of the assembly, positioned below the tension member 100. The shoulder portion 112 of the tension member 100 may provide a transition between the wider portion 102 and the narrow portion 110, allowing for proper fitment with the array plate 150 and side rail 155.

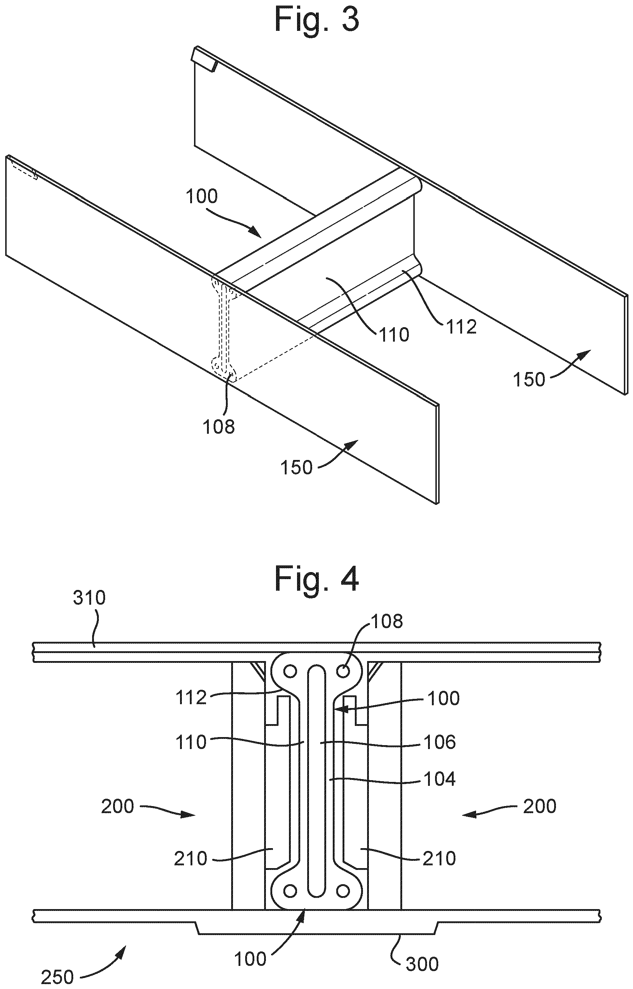

FIG. 3 illustrates a perspective view of an assembly comprising a tension member 100 and two array plates 150. The tension member 100 spans between the two array plates 150, effectively dividing the assembly into first and second submodules. Each of the first and second submodules includes an array plate 150 and may comprise a battery pack.

The tension member 100 extends across the width of the assembly, connecting the two array plates 150 positioned at either end of the tension member 100. The wider portion 102 of the tension member 100 is configured to attach to the array plates 150. The tension member 100 includes bolt holes 108 at each end, which are designed to accommodate bolts for securing the tension member 100 to the array plates 150.

The narrow portion 110 of the tension member 100 is positioned between the array plates 150. The shoulder portion 112 of the tension member 100 provides a transition between the wider portion 102 and the narrow portion 110, allowing for proper fitment with the array plates 150.

The hollow portion 106 of the tension member 100 extends along its length, creating an air gap that may separate the first and second submodules. This air gap may provide insulation between the submodules. Therefore, it can be said that the tension member 100 forms an air gap within the structure, potentially preventing heat from one battery array from affecting the performance of neighboring arrays. The tension member 100 eliminates the need for welding in the assembly of the battery module, providing a robust solution for the assembly of battery modules in vehicles.

The assembly of the tension member 100 with the two array plates 150 forms a battery module. The tension member 100 serves to connect and stabilize the two array plates 150, which may each be associated with a battery pack. The resulting structure provides a robust framework for the battery module, with the tension member 100 offering rigidity and support between the two submodules.

FIG. 4 illustrates a cross-sectional view of the tension member 100 as part of a battery pack 250. The battery pack 250 comprises multiple components integrated together to form a complete assembly.

The tension member 100 is positioned centrally within the battery pack 250. The tension member 100 includes two vertical side walls 104 which form the hollow portion 106 in the middle. This hollow portion 106 creates an air gap within the structure of the tension member 100, which may provide thermal insulation between battery arrays 200.

At the upper part of the tension member 100, the bolt holes 108 are visible. These bolt holes 108 may be used for securing the tension member 100 to other components of the battery pack 250. The tension member 100 also features the shoulder portions 112 that extend outward from the narrow portions 110, creating a distinct profile.

The battery pack 250 includes at least two battery arrays 200. These battery arrays 200 are positioned on either side of the tension member 100. The narrow portions 110 of the tension member 100 accommodate battery connections 210, which form part of the battery arrays 200.

A cold plate 300 is provided at the base of the battery pack 250. The cold plate 300 serves as a foundation on which the battery arrays 200 are positioned. The tension member 100 is placed on top of the cold plate 300, effectively separating the battery arrays 200.

The battery pack 250 also includes two side rails (not shown in FIG. 4). The tension member 100 is provided between these two side rails and affixed to them, further enhancing the structural integrity of the battery pack 250.

A pack top 310 is positioned at the upper part of the battery pack 250, serving as a cover for the assembly.

The single-piece construction of the tension member 100 may contribute to the overall rigidity of the battery pack 250. This design may help prevent bending of the battery pack 250 when lifted, potentially reducing the risk of damage to the cold plate 300 or the battery arrays 200.

The air gap formed by the hollow portion 106 of the tension member 100 may provide thermal insulation between the battery arrays 200. This thermal insulation may be beneficial in scenarios where one battery array 200 experiences an increased temperature or a failure, potentially isolating the thermal event from affecting the other battery array 200.

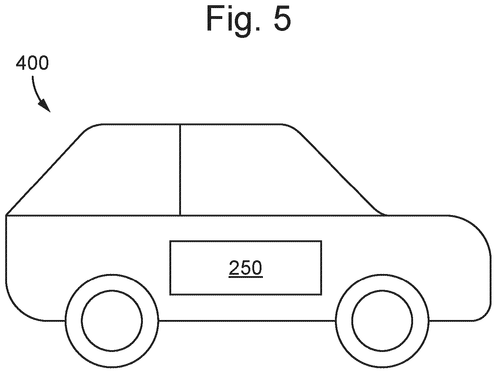

FIG. 5 illustrates a side view outline of a vehicle 400. The vehicle 400 incorporates a battery pack 250 within its structure. The battery pack 250 is positioned in the middle of the vehicle's body, providing a centralized power source for the vehicle 400.

The battery pack 250, which includes the tension member 100, is integrated into the vehicle 400 as a complete unit. The tension member 100, as described earlier, provides structural support and separation for the battery arrays within the battery pack 250. This integration allows the vehicle 400 to benefit from the robust and efficient design of the battery pack 250.

The positioning of the battery pack 250 in the middle of the vehicle 400 may contribute to weight distribution and overall vehicle balance. The battery pack 250, with its cold plate 300, battery arrays 200, and pack top 310, is securely housed within the vehicle structure. In some examples a longitudinal direction of the tension member 100 may be aligned with a longitudinal plane of the vehicle 400. In some examples a longitudinal direction of the tension member 100 may be aligned with a transverse plane of the vehicle 400. For example, the longitudinal direction of the tension member 100 may be aligned relative to a plane of the vehicle 400 to enhance structural rigidity and/or crashworthiness of the vehicle 400. For example, a battery array 200 may be orientated in a vehicle 400, e.g., a convertible vehicle, such that the tension member 100 is aligned with a desired plane of the vehicle 400 to enhance structural rigidity in that plane.

The tension member 100, being an integral part of the battery pack 250, is thus incorporated into the vehicle 400. The tension member 100, with its wider portions 102, narrow portions 110, and hollow portion 106, provides structural integrity to the battery pack 250 within the vehicle 400.

The vehicle 400 comprising the battery pack 250 benefits from the design features of the tension member 100. The hollow portion 106 of the tension member 100 may provide thermal management benefits within the confined space of the vehicle 400. The bolt holes 108 in the tension member 100 may facilitate secure attachment of the battery pack 250 within the vehicle structure.

The integration of the battery module, which contains the tension member 100, into the vehicle 400 demonstrates the practical application of the tension member design in automotive applications. The vehicle 400 utilizes the battery pack 250, which includes the array plates 150, side rails 155, and the tension member 100, as its power source.

Features of any of the examples or embodiments outlined above may be combined to create additional examples or embodiments without losing the intended effect. It should be understood that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A tension member for a battery module which includes at least two battery packs, wherein the tension member defines a length, is hollow along its length, and is formed of a single piece, and wherein the tension member is configured to:
divide the battery module into first and second submodules, each of the first and second submodules having an end plate and comprising a battery pack; and
attach to an array plate of each battery submodule.

2. The tension member of claim 1, wherein the tension member is made of aluminium.

3. The tension member of claim 1 or claim 2, wherein the tension member is formed by extrusion.

4. The tension member of any preceding claim, wherein the tension member has a first end and a second end, and wherein the first and second ends include respective first and second end surfaces configured to attach to the array plate of each battery submodule.

5. The tension member of claim 4, wherein the tension member is configured to be attached to two array plates.

6. The tension member of claim 4 or claim 5, wherein the tension member is configured to be attached to the array plate of each battery submodule using bolts.

7. The tension member of any preceding claim wherein the tension member includes a mounting portion and a central portion, wherein the mounting portion is wider than the central portion.

8. The tension member of claim 7, wherein the mounting portion includes at least one threaded aperture.

9. The tension member of claim 7 or claim 8, wherein the tension member includes a shoulder portion which is defined by a change in width of the tension member between the mounting and central portions.

10. The tension member of any one of claims 7-9, wherein the central portion of the tension member is shaped to accommodate connections of a battery array.

11. The tension member of any preceding claim, wherein the tension member is shaped to accommodate an array plate which includes a side rail.

12. A battery module comprising the tension member of any one of claims 1-11.

13. The battery module of claim 12 wherein the battery module further comprises a cold plate on which at least two battery arrays are provided, and two side rails, wherein the tension member is provided between two side rails and on top of the cold plate, such that the tension member is affixed to the side rails and separates the two battery arrays.

14. A vehicle comprising the tension member of any one of claims 1-12.

15. A vehicle comprising the battery module of claim 12 or claim 13.
